# EUROPEAN PATENT SPECIFICATION

(11) **EP 0 863 948 B1**
(45) Date of publication and mention of the grant of the patent: **11.08.1999**
(21) Application number: 96942310.2
(22) Date of filing: 27.11.1996
(51) Int. Cl.: C08L 95/00, C08J 9/30

(54) **BITUMEN COMPOSITIONS AND A PROCESS FOR THEIR PREPARATION**
BITUMENZUSAMMENSETZUNGEN UND VERFAHREN ZU IHRER HERSTELLUNG
COMPOSITIONS DE BITUME ET LEUR PROCEDE DE PREPARATION

(30) Priority: 28.11.1995 EP 95308549; 11.12.1995 EP 95402790
(43) Date of publication of application: 16.09.1998
(73) Proprietor: SHELL INTERNATIONALE RESEARCH MAATSCHAPPIJ B.V., 2596 HR Den Haag (NL)
(72) Inventor: CHION, Jacques Shell Recherche S.A., F-76530 Grand-Couronne (FR); MORIZUR, Marie-Françoise Shell Recherche S.A., F-76530 Grand-Couronne (FR)
(74) Representative: Spierenburg, Jan
(86) International application number: EP9605366
(87) International publication number: WO9719981

(56) References cited:
- WO-A-94/16019
- US-A- 3 853 798

## Description

The present invention relates to bitumen compositions, a process for their preparation and the use of them in bitumen for industrial applications, in particular roofing applications.

Bitumen has developed continually to meet ever-increasing performance demands from for instance building constructors. Advances in building techniques necessitate the development of very high performance roofing felt systems. Such roofing felt systems need to be sufficiently flexible, elastic and resistant to permanent deformation at all service temperatures to accommodate the movement without losing their waterproofing performance.

A known technique to improve the performance of bitumen comprises modifying the bitumen by incorporating into it high levels of a thermoplastic rubber. In this way a higher degree of elasticity and an improved durability can be established.

Another known technique includes subjecting the bitumen to a so-called blowing process, optionally in the presence of a bitumen blowing catalyst, by way of which the temperature susceptibility of the bitumen can be reduced. A combination of the above-mentioned techniques is for instance taught by US 5,342,866 whereby the blowing is carried out under mild conditions.

In practice a bitumen needs to be blown with an oxygen-containing gas, optionally in the presence of a bitumen blowing catalyst, for some time to cause the bitumen to reach a pre-selected softening point or penetration.

Since, the blowing process needs to be closely controlled in order to protect the bitumen product and to prevent thermal runaway, auto-ignition, explosion and fire, it would be highly advantageous to develop a blowing process which could be carried out over a short period of time to reach a pre-selected softening point or penetration.

Surprisingly, it has now been found that blowing processes of relatively soft bitumens can be carried out over either a shorter period of time or at a reduced temperature when compared with conventional blowing processes, when the bitumen to be blown contains in addition a small amount of a thermoplastic rubber, and optionally a small amount of a bitumen blowing catalyst.

Accordingly, the present invention relates to a process for preparing a bitumen composition comprising blowing a mixture with an oxygen-containing gas which mixture comprises a bitumen having a penetration of at least 300 dmm (as measured by ASTM D 5 at 25°C) and a thermoplastic rubber which is present in an amount less than 1 %w, based on total mixture.

Preferably, the thermoplastic rubber is present in an amount in the range of from 0.1 to 0.5 %w, based on total mixture.

It is of importance to note that the small amount of thermoplastic rubber applied in accordance with the present invention has indeed a significant impact on the reaction kinetics of the blowing process, whereas the amount is insufficient to modify the bitumen as described herein before.

Preferably, the process is carried out in the presence of a bitumen blowing catalyst.

An additional surprising effect is the finding that the use of the small amount of thermoplastic rubber allows the use of very small amounts of bitumen blowing catalyst. Suitably, use is made of a bitumen blowing catalyst in an amount of less than 1% wt, based on total mixture.

More Preferably, use is made of a bitumen blowing catalyst in an amount of less than 0.7 %w, most preferably in an amount in the range of from 0.3 to 0.5 %w, based on total mixture.

Suitable bitumen blowing catalysts which are all well known in the art include ferric chloride, phosphorus pentoxide, aluminium chloride, boric acid, and phosphoric acid. Preferably use is made of phosphoric acid.

The blowing is carried out with an oxygen-containing gas, such as air or pure oxygen. Preferably, use is made of air.

Suitably, the process according to the present invention is carried out at a temperature in the range of from 190 to 310 °C.

The process according to the present invention may be carried out at ambient pressure or elevated pressure. Normally, however, it will be carried out at ambient pressure.

Suitably, the present process is carried out over a period of time of more than 1 hour, preferably more than 2 hours. Normally, the process is carried over a period of time of not more than 6 hours.

The mixture comprises a thermoplastic rubber. The mixture may comprise one or more different types of thermoplastic rubbers.

Although a wide range of thermoplastic rubbers can suitably be used in accordance with the present invention, the preferred thermoplastic rubbers comprise optionally hydrogenated block copolymers which comprise at least two terminal poly(monovinylaromatic hydrocarbon) blocks and at least one central poly(conjugated diene) block.

Preferably block copolymer constituents are selected from the group consisting of those of the formulae A(BA)ₘ or (AB)ₙ X, wherein A represents a block of predominantly poly(monovinylaromatic hydrocarbon), wherein B represents a block of predominately poly(conjugated diene), wherein X represents the residue of a multivalent coupling agent and wherein n represents an integer ≥ 1, preferably ≥ 2, and m represents an integer ≥ 1, preferably m is 1.

More preferably the blocks A represent predominantly poly(styrene) blocks and the B blocks represent predominantly poly(butadiene) or poly(isoprene). Multivalent coupling agents to be used include those commonly known in the art.

With the term "predominantly" is meant that the respective blocks A and B may be mainly derived from monovinyl aromatic hydrocarbon monomer and conjugated diene monomer, which monomers may be mixed with other structurally related or non-related co-monomers, e.g. mono-vinyl aromatic hydrocarbon monomer as main component and small amounts (up to 10%) of other monomers or butadiene mixed with isoprene or with small amounts of styrene.

More preferably the copolymers contain pure poly(styrene), pure poly(isoprene) or pure poly(butadiene) blocks, of which the poly(isoprene) or poly(butadiene) blocks may be selectively hydrogenated to at most a residual ethylenic unsaturation of 20% and most preferably less than 5%. Most preferably the applied block copolymer has the structure ABA, wherein A has an apparent mol wt of from 3000 to 100,000, and preferably from 5,000 to 40,000 and B has an apparent mol wt of from 10,000 to 250,000 and preferably from 40,000 to 200,000. The originally prepared poly(conjugated diene) blocks usually contain from 5 to 50 mol% vinyl groups, originating from 1,2 polymerisation relative to the conjugated diene molecules, and preferably a vinyl content from 10 to 25%.

The complete block copolymer to be used according to the present invention, is normally containing polymerised mono-vinyl aromatic hydrocarbon monomer in an amount of from 10 to 60% by weight and preferably from 15 to 45% by weight.

The apparent molecular weight of the total block copolymer will normally be in the range of from 15,000 to 350,000 and preferably in the range of from 40,000 to 250,000.

As examples of suitable pure block copolymers can be mentioned KRATON G-1651, KRATON G-1654, KRATON G-1657, KRATON G-1650, KRATON G-1701, KRATON D-1101, KRATON D-1102, KRATON D-1107, KRATON D-1111, KRATON D-1116, KRATON D-1117, KRATON D-1118, KRATON D-1122, KRATON D-1135X, KRATON D-1184, KRATON D-1144X, KRATON D-1300X, KRATON D-4141, and KRATON D-4158 (KRATON is a trademark).

The bitumen may be a residue from distillation of crude oil, a cracked residue, a residue obtained by blowing a crude oil or residues of crude oil distillation or extracts of crude oils, a bitumen derived from propane bitumen, butane bitumen, pentane bitumen or mixtures thereof. Suitably, the bitumens include mixtures of the above bitumens with extenders (fluxes) such as petroleum extracts, e.g. aromatic extracts, distillates or residues. Suitably, the bitumen contains not more than 50 %w of an extender, preferably not more than 45 %w, based on total bitumen.

The bitumen applied in the present process has a penetration of at least 300 dmm (as measured by ASTM D 5 at 25°C). The person skilled in the art, however, usually characterizes such bitumen not by its penetration value but by its viscosity at 100°C (as determined with ASTM D 2171). A penetration of 300 dmm (at 25°C) corresponds to a viscosity (at 100°C) of about 1.5 Pa.s. Preferably the bitumen has a viscosity as defined above of at least 0.05 Pa.s, in particular of from 0.1 to 1 Pa.s.

The bitumen composition obtained has suitably a penetration of less than 100dmm, preferably less than 50dmm (as measured by ASTM D 5 at 25°C) and a softening point in the range of 60 to 140°C, preferably in the range of 80 to 120 °C (as measured by ASTM D 36), and contains less than 1 %wt, preferably of from 0.1 to 0.5 %w of any one of the before-mentioned thermoplastic rubbers, based on total bitumen composition.

Fillers such as carbon black, silica and calcium carbonate, stabilisers, antioxidants, pigments, and solvents are known to be useful in bitumen compositions and can be incorporated in the compositions of this invention in concentrations taught in the art.

As will be understood by the skilled person, the mixture of bitumen and the thermoplastic rubber is preheated before being subject to the blowing process. The mixture of bitumen and the thermoplastic rubber is normally preheated in a such way to establish an initial mixture temperature in the range of from 160 to 220°C. The preheated mixture is then normally blown at a temperature in the range of from 240 to 290°C.

The present invention further provides a bitumen composition obtainable by any of the processes described herein before. Such a bitumen composition has attractive oxidative properties.

The present invention still further relates to the use of a bitumen composition as described herein before in industrial, e.g. roofing applications.

The present invention will now be illustrated by means of the following Examples.

### Examples

### Example 1

A bitumen was prepared from a mixture of 65 %w of a non-naphthenic short residue and 35 %w of a paraffinic distillate. The bitumen had a viscosity of 0.17 Pa.s (as determined with ASTM D 2171 at 100 °C). To this bitumen was added 0.3 %w of a block copolymer and 0.7 %w of phosphoric acid, based on total mixture. The block copolymer used was a hydrogenated polystyrene-polybutadiene-polystyrene block copolymer with a 30 %w styrene content and a number average molecular weight of 103,000 as measured by GPC with a polystyrene standard. The ethylenic unsaturation of the polymer had been reduced to less than 1% of the original unsaturation by hydrogenation.

Firstly, the bitumen and the block copolymer were blended at a temperature of 180°C. Subsequently, the preheated mixture so obtained was blown with air in a blowing vessel at a temperature of 200 °C during 2 hours. The phosphoric acid was introduced in the preheated mixture at the beginning of the blowing process. The main properties of the blown bitumen composition so obtained are shown in Table 1.

### Example 2

A blowing process was carried out in a similar way as described in Example 1, except that the preheated mixture contained 0.5%w phosphoric acid. The main properties of the blown bitumen composition so obtained are shown in Table 1.

### Example 3

A blowing process was carried out in a similar way as described in Example 1, except that the preheated mixture did not contain phosphoric acid. The main properties of the blown bitumen composition so obtained are shown in Table 1.

### Example 4

A comparative blowing process was carried out in a similar way as described in Example 1 except that the preheated bitumen neither contained the block copolymer nor phosphoric acid. The main properties of the blown bitumen composition so obtained are shown in Table 1.

### Example 5

A blowing process was carried out in a similar manner as described in Example 2, except that the bitumen was prepared from a mixture of 58 %w of a non-naphthenic short residue and 42 %w of a paraffinic distillate, and that a temperature was applied of 255°C during 4 hours and 20 minutes. The bitumen had a viscosity of 0.14 Pa.s (as determined with ASTM D 2171 at 100 °C).

### Example 6

A comparative blowing process was carried out in a similar manner as described in Example 4, except that the bitumen was prepared from a mixture of 48 %w of a non-naphthenic short residue and 52 %w of a paraffinic distillate, and that a temperature was applied of 265°C during 4 hours and 20 minutes. The bitumen had a viscosity of 0.08 Pa.s (as determined with ASTM D 2171 at 100 °C).

From the results shown in Table 1 it will be clear that with the process according to the present invention (Examples 1, 2 and 3) a bitumen composition can be prepared having a penetration index in the range of from 3 to 8 in a far shorter period of time when compared with a conventional blowing process (Example 4). In the examples, the gain of time for a penetration index of 4 ranges from 25% to 45%, depending on the amount of blowing catalyst that is used.

From the results in Table 2 it will be clear that with the process according to the present invention (Example 5) a bitumen composition can be prepared having a penetration index in the range of from 3 to 8 at a reduced temperature when compared with a conventional blowing process (Example 6).

**Table 1**

| Example | 1 | 2 | 3 | 4 |
|---|---|---|---|---|
| **Composition** | | | | |
| thermoplastic rubber (%w) | 0.3 | 0.3 | 0.3 | 0 |
| phosphoric acid (%w) | 0.7 | 0.5 | 0 | 0 |

| **Properties after 4 hours blowing** | | | | |
|---|---|---|---|---|
| Penetration 25°C | 148 | 179 | | |
| Softening Point Ring and Ball | 54 | 49.5 | | |
| Penetration Index | 3.2 | 2.9 | | |

| **Properties after 6 hours blowing** | | | | |
|---|---|---|---|---|
| Penetration 25°C | 60 | 65 | 51 | 103 |
| Softening Point Ring and Ball | 109 | 88 | 78 | 58 |
| Penetration Index | 8.0 | 6.1 | 4.1 | 2.8 |

| **Properties after 8 hours blowing** | | | | |
|---|---|---|---|---|
| Penetration 25°C | | 37 | 26 | 51 |
| Softening Point Ring and Ball | | 133 | 120 | 79 |
| Penetration Index | | 8.5 | 6.8 | 4.2 |

**Table 2**

| Example | 5 | 6 |
|---|---|---|
| **Composition** | | |
| thermoplastic rubber (%w) | 0.3 | 0 |
| phosphoric acid (%w) | 0.5 | 0 |
| blowing time | 4h 25 | 4h 20 |
| temperature °C | 255 | 268 |

| **Properties after blowing** | | |
|---|---|---|
| Penetration 25°C | 37 | 35 |
| Softening Point Ring and Ball | 95 | 98 |
| Penetration Index | 5.4 | 5.6 |

## Claims

1. Process for preparing a bitumen composition comprising blowing a mixture with an oxygen-containing gas which mixture comprises a bitumen having a penetration of at least 300 dmm (as measured by ASTM D 5 at 25°C) and a thermoplastic rubber which is present in an amount of less than 1 %w, based on total mixture.

2. Process according to claim 1, wherein the thermoplastic rubber is present in an amount of from 0.1 to 0.5 %w, based on total mixture.

3. Process according to claims 1 or 2, wherein the mixture is blown with air.

4. Process according to any one of claims 1-3, wherein the thermoplastic rubber comprises an optionally hydrogenated block copolymer which comprises at least two terminal poly(monovinylaromatic hydrocarbon) blocks and at least one central poly(conjugated diene) block.

5. Process according to claim 4, wherein the block copolymer has the formulae A(BA)ₘ or (AB)ₙX wherein A represents a block of predominantly poly(monovinylaromatic hydrocarbon) and wherein B represents a block of predominantly poly(conjugated diene), wherein X represents the residue of a multivalent coupling agent and wherein n is an integer ≥ 1 and m is an integer ≥ 1.

6. Process according to claim 5, wherein the A blocks are predominantly poly(styrene) blocks and the B blocks are predominantly poly(butadiene) or poly(isoprene) blocks.

7. Process according to any one of claims 1-6, wherein the bitumen has a viscosity at 100°C of from 0.1 to 1 Pa.s (as determined by ASTM D 2171).

8. Process according to any one of claims 1-7, which is carried out in the presence of a bitumen blowing catalyst.

9. Process according to claim 8, wherein use is made of the bitumen blowing catalyst in an amount of less than 1%w, based on total mixture.

10. Process according to any one of claims 1-9, wherein the bitumen catalyst comprises phosphoric acid.

11. Bitumen composition obtainable by a process as defined in any one of claims 1-10.

12. Use of a bitumen composition as defined in claim 11 in a bitumen for industrial applications.

## Patentansprüche

1. Verfahren zur Herstellung einer Bitumenzusammensetzung, umfassend das Blasen eines Gemisches mit einem sauerstoffhältigen Gas, welches Gemisch ein Bitumen mit einer Penetration von wenigstens 300 dmm (bestimmt gemäß ASTM D 5 bei 25°C) und einen thermoplastischen Kautschuk umfaßt, der in einer Menge von weniger als 1 Gew.-%, bezogen auf das Gesamtgemisch, vorliegt.

2. Verfahren nach Anspruch 1, worin der thermoplastische Kautschuk in einer Menge von 0,1 bis 0,5 Gew.-%, bezogen auf das Gesamtgemisch, vorliegt.

3. Verfahren nach den Ansprüchen 1 oder 2, worin das Gemisch mit Luft geblasen wird.

4. Verfahren nach einem der Ansprüche 1 bis 3, worin der thermoplastische Kautschuk ein gegebenenfalls hydriertes Blockcopolymer umfaßt, das wenigstens zwei endständige Poly(vinylaromatischer Kohlenwasserstoff)blöcke und wenigstens einen zentralen Poly(konjugiertes Dien)block umfaßt.

5. Verfahren nach Anspruch 4, worin das Blockcopolymer die Formeln A(BA)ₘ oder (AB)ₙX aufweist, worin A einen Block aus vorwiegend Poly(monovinylaromatischer Kohlenwasserstoff) darstellt und worin B einen Block aus vorwiegend Poly(konjugiertes Dien) darstellt, X den Rest eines mehrwertigen Kupplungsmittels bedeutet und n eine ganze Zahl > 1 ist und m eine ganze Zahl ≥ 1 ist.

6. Verfahren nach Anspruch 5, worin die Blöcke A vorwiegend Poly(styrol)blöcke sind und die Blöcke B vorwiegend Poly(butadien) - oder Poly(isopren)blöcke sind.

7. Verfahren nach einem der Ansprüche 1 bis 6, worin das Bitumen eine Viskosität bei 100°C von 0,1 bis 1 Pa.s(bestimmt gemäß ASTM D 2171) aufweist.

8. Verfahren nach einem der Ansprüche 1 bis 7, das in Gegenwart eines Bitumenblaskatalysators ausgeführt wird.

9. Verfahren nach Anspruch 8, worin von dem Bitumenblaskatalysator in einer Menge von weniger als 1 Gew.-%, bezogen auf das Gesamtgemisch, Gebrauch gemacht wird.

10. Verfahren nach einem der Ansprüche 1 bis 9, worin der Bitumenkatalysator Phosphorsäure umfaßt.

11. Bitumenzusammensetzung, erhältlich nach einem Verfahren, wie in einem der Ansprüche 1 bis 10 definiert.

12. Verwendung einer Bitumenzusammensetzung, wie in Anspruch 11 definiert, in einem Bitumen für technische

## Revendications

1. Procédé de préparation d'une composition de bitume comprenant le soufflage d'un mélange avec un gaz contenant de l'oxygène, lequel mélange comprend un bitume ayant une pénétration d'au moins 300 dmm (telle que mesurée par la méthode ASTM D 5 à 25°C) et un caoutchouc thermoplastique qui est présent en une quantité inférieure à 1 % en poids, par rapport au mélange total.

2. Procédé suivant la revendication 1, dans lequel le caoutchouc thermoplastique est présent en une quantité de 0,1 à 0,5 % en poids par rapport au mélange total.

3. Procédé suivant l'une ou l'autre des revendications 1 et 2, dans lequel le mélange est soufflé avec de l'air.

4. Procédé suivant l'une quelconque des revendications 1 à 3, dans lequel le caoutchouc thermoplastique comprend un copolymère bloc éventuellement hydrogéné qui comprend au moins deux blocs de poly(hydrocarbure monovinylaromatique) terminaux et au moins un bloc de poly(diène conjugué) central.

5. Procédé suivant la revendication 4, dans lequel le copolymère bloc a les formules A(BA)ₘ ou (AB)ₙX, dans lesquelles A représente un bloc essentiellement de poly(hydrocarbure monovinylaromatique) et dans lesquelles B représente un bloc essentiellement de poly(diène conjugué), dans lesquelles X représente le résidu d'un agent de couplage multivalent et dans lesquelles n est un nombre entier ≥ 1 et m est un nombre entier ≥ 1.

6. Procédé suivant la revendication 5, dans lequel les blocs A sont essentiellement des blocs de poly(styrène) et les blocs B sont essentiellement des blocs de poly(butadiène) ou poly(isoprène).

7. Procédé suivant l'une quelconque des revendications 1 à 6, dans lequel le bitume a une viscosité à 100°C de 0,1 à 1 Pa.s (telle que déterminée par la norme ASTM D 2171).

8. Procédé suivant l'une quelconque des revendications 1 à 7, qui est réalisé en présence d'un catalyseur de soufflage de bitume.

9. Procédé suivant la revendication 8, dans lequel on utilise le catalyseur de soufflage de bitume en une quantité inférieure à 1 % en poids par rapport au mélange total.

10. Procédé suivant l'une quelconque des revendications 1 à 9, dans lequel le catalyseur de bitume comprend de l'acide phosphorique.

11. Composition de bitume obtenable par le procédé suivant l'une quelconque des revendications 1 à 10.

12. Utilisation d'une composition de bitume suivant la revendication 11 dans un bitume pour des applications industrielles.
